# EUROPÄISCHE PATENTANMELDUNG

(11) **EP 2 199 130 A2**
(43) Veröffentlichungstag der Anmeldung: **23.06.2010**
(21) Anmeldenummer: 09015313.1
(22) Anmeldetag: 10.12.2009
(51) Int. Cl.: B60J 7/19

(54) **Öffnungs- und Schließvorrichtung eines Verdeckkastendeckels**

(30) Priorität: 22.12.2008 DE 102008064374
(71) Anmelder: Webasto AG, 82131 Stockdorf (DE)
(72) Erfinder: Miklosi, Stefan, 81247 München (DE); Haussmann, Jochen, 82346 Andechs (DE); Reinsch, Burkhard, 87680 Kaufbeuren (DE)
(74) Vertreter: Bosch, Matthias

(57) **Zusammenfassung**

Bei der Erfindung handelt es sich um eine Vorrichtung zum Öffnen und Schließen eines Verdeckkastendeckels, dem in Schließstellung ein Aufnahmeraum zur Unterbringung eines Verdecks zugeordnet ist. Die Vorrichtung umfasst eine Öffnungs- und Schließeinrichtung zum Öffnen und Schließen des Verdeckkastendeckels und eine Ver- und Entriegelungseinrichtung zum Verriegeln und Entriegeln des Verdeckkastendeckels. Eine Hubeinrichtung ist zwischen der Ver- und Entriegelungseinrichtung (6-15) und der Öffnungs- und Schließeinrichtung (2-4) derart angeordnet, dass ein Verriegeln und Entriegeln sowie ein Öffnen und Schließen des Verdeckkastendeckels (1) durch die Hubeinrichtung (5a,b) steuerbar ist.

## Beschreibung

Der Gegenstand der vorliegenden Erfindung ist eine Öffnungs- und Schließvorrichtung eines Verdeckkastendeckels eines Cabriolet-Fahrzeugs.

Aus dem Stand der Technik sind Öffnungs- und Schließmechanismen bekannt, die zum automatischen Verschwenken des Verdeckkastens dienen. Der Verdeckkastendeckel wird dabei jeweils zur Ein- und Auslagerung des Verdecks eines Cabriolet-Fahrzeuges im Verdeckkasten geöffnet und wieder geschlossen.

Aus der Deutschen Patentschrift DE 19650 402 C2 ist ein Verdeckkastendeckel bekannt, der mittels einer Antriebseinrichtung von einer Schließstellung in eine hochgeschwenkte Offenstellung bewegbar ist. Ein ähnlicher Gegenstand ist auch in der US Patentanmeldung US 5,033,789 A offenbart.

Des Weiteren ist in der Deutschen Patentanmeldung DE 198 45 178 A1 eine Vorrichtung offenbart, die über zwei Gelenkhebelvorrichtungen die automatische Öffnung und Schließung des Verdeckkastendeckels ermöglicht. Hier geht die Automatisierung von jeweils einer Hubeinrichtung aus, die vertikal die Fahrzeugkarosserie mit der Gelenkhebelvorrichtung verbindet.

Als nächstliegenden Stand der Technik sehen wir die Deutsche Patentanmeldung DE 10 2006 042 197 A1 an. Hier wird eine Gestängeanordnung offenbart, die eine Antriebsvorrichtung beinhaltet, die horizontal zwischen der Fahrzeugkarosserie und der Gestängeanordnung verbunden ist. Beim Ausfahren der Antriebsvorrichtung wird der Verdeckkastendeckel zuerst entriegelt und dann durch eine Hebelwirkung so geöffnet, dass der Verdeckkastendeckel im Wesentlichen parallel zum Boden hoch und nach hinten geschoben wird.

Der Stand der Technik hat gewisse Nachteile. So benötigen zum Beispiel die meisten der zuvor genannten Erfindungen mehrere Antriebsvorrichtungen. Die Anzahl der Antriebsvorrichtungen hat eine große Auswirkung auf die Produktionskosten, da zum einen mehr Antriebe gekauft werden müssen und zum andere diese auch eingebaut und verkabelt werden müssen. Ferner kommt noch hinzu, dass eine größere Anzahl von antreibenden Bauteilen in einem System dieses anfälliger für Störungen macht.

Ein weiterer Nachteil ist die Hublänge der Hubeinrichtung. Eine direkte Koppelung zwischen einem Verdeckkastendeckel, der schwenkbar über eine Achse mit der Karosserie verbunden ist, und derselben Karosserie würde zum einen eine längere Bedienzeit bedeuten und zum anderen eine relativ lange Hublänge der Hubeinrichtung benötigen. Das Letztere hätte zwangsläufig zur Folge, dass der Hubzylinder relativ lang sein müsste, was dazu führt, dass die Hubeinrichtung selbst im eingefahrenen Zustand sehr viel Platz einnimmt.

Der beanspruchte Platz der Systeme innerhalb der Fahrzeugkarosserie ist ein überaus wichtiger Punkt. Da die Verdeckkästen, die meistens im Heck eines Fahrzeuges platziert sind, sich den verfügbaren Raum innerhalb der Karosserie entweder mit einem Kofferraum oder dem Motorraum teilen müssen, sind die Möglichkeiten begrenzt. Ferner kommt hinzu, dass die modernen, stromlinienförmigen Karosserieentwürfe der Fahrzeughersteller schlanke und sportliche Hecks bevorzugen, was den verfügbaren Raum weiterhin einschränkt.

Hier ist auch weiterhin zu beachten, dass der Raum zwischen den beiden Gestängeanordnungen groß genug sein muss, um bei geöffnetem Verdeckkastendeckel dem einfahrenden Verdeck nicht im Wege zu sein. Die meisten Offenbarungen auf diesem Gebiet beschreiben eine Vorrichtung, die aber zweimal, auf jeder Fahrzeugseite einmal, verwendet wird. Das hat zur Folge, dass die Gestängeanordnungen vom Inneren der Karosserie hinaus den Verdeckkastendeckel emporheben müssen. Dies hat wiederum eine Auswirkung auf die Offenstellung des Verdeckkastendeckels, die es weiterhin ermöglichen muss, das Verdeck in den Kasten abzusetzen. Aus diesem Grund wird in dem Stand der Technik die Offenbarung jeweils an der Außenseite des Verdeckkastendeckels angebracht. Da das Verdeck normalerweise über die gesamte Fahrzeugbreite ausgebildet ist, ist dies mit Schwierigkeiten und Designeinschränkungen verbunden. Dies gilt besonders für die neue Generation von Hardtop-Cabriolets. Deren Verdecke sind normalerweise in eine bestimmte Anzahl von Teilstücken unterteilt, die nicht weiter komprimiert werden können, und in ihrer ganzen Größe in den Verdeckkasten gelegt werden müssen.

Designtechnisch gibt es nur zwei Möglichkeiten, dieses Problem zu lösen. Entweder man opfert möglichen Stauraum seitlich des Verdeckkastens, oder man erweitert den Verdeckkastendeckel so weit, dass er Teile des Kotflügels mit einbezieht. Letzteres hat den Nachteil, dass man die Verdeckkastendeckelfugen nicht mehr frei platzieren kann. Eine möglichst unauffällige Platzierung dieser entstehenden Fugen im Einklang mit der Form des Hecks wird hierdurch problematisch. Zum Beispiel ist eine Platzierung in der Sohle einer Stromlinienrinne, welche die Fuge dezent verstecken würde, sehr schwer zu bewerkstelligen.

Der Erfindung liegt daher die Aufgabe zugrunde, eine Öffnungs- und Schließungsvorrichtung für einen Verdeckkastendeckel zu schaffen, die kostengünstig und zuverlässig ist, ein schnelles Öffnen und Schließen des Verdeckkastendeckels ermöglicht, einen minimalen Bauraum für sich beansprucht und den vorhandenen Bauraum optimal ausnutzt.

Die Erfindung löst die Aufgabe mit den Merkmalen des Vorrichtungsanspruchs 1. Weitere vorteilhafte Ausgestaltungen der Erfindung sind in den jeweiligen Unteransprüchen angegeben.

Die erfindungsgemäße Vorrichtung zum Öffnen und Schließen eines Verdeckkastendeckels eines Fahrzeuges umfasst eine Öffnungs- und Schließeinrichtung zum Öffnen und Schließen des Verdeckkastendeckels und eine Ver- und Entriegelungseinrichtung zum Verriegeln und Entriegeln des Verdeckkastendeckels. Zusätzlich umfasst die erfindungsgemäße Vorrichtung eine Hubeinrichtung. Die Hubeinrichtung ist zwischen der Ver- und Entriegelungseinrichtung und der Öffnungs- und Schließeinrichtung derart angeordnet, dass ein Verriegeln und Entriegeln sowie ein Öffnen und Schließen des Verdeckkastendeckels durch die Hubeinrichtung steuerbar ist.

Kennzeichnend für die erfindungsgemäße Öffnungs- und Schließvorrichtung des Verdeckkastendeckels ist es, dass eine Hubeinrichtung zwischen der Ver- und Entriegelungseinrichtung und der Öffnungs- und Schließeinrichtung angebracht ist. Die Hubeinrichtung steuert die Ver- und Entriegelungseinrichtung und die Öffnungs- und Schließeinrichtung. Erfindungsgemäß wird nur eine Hubeinrichtung für die Steuerung der Ver- und Entriegelungseinrichtung und die Steuerung der Öffnungs- und Schließeinrichtung benötigt. Deshalb können die Produktionskosten gesenkt werden. Die Verringerung der Anzahl der Antriebseinheiten erhöht die Zuverlässigkeit der erfindungsgemäßen Vorrichtung.

Vorzugsweise ist die erfindungsgemäße Vorrichtung unterhalb des Verdeckkastendeckels angeordnet. Beim Öffnen des Verdeckkastendeckels entsteht ein Freiraum zwischen dem Verdeckkastendeckel und dem Fahrzeug. In diesen Freiraum kann nun die erfindungsgemäße Vorrichtung herausschwenken. Somit bedarf es keines Freiraums innerhalb der Fahrzeugkarosserie, in den die Vorrichtung zum Öffnen und Schließen des Verdeckkastendeckels ausschwenken muss.

Vorzugsweise umfasst die Ver- und Entriegelungseinrichtung einen ersten Anschlag. Der erste Anschlag kann derart angeordnet sein, dass beim Öffnen des Verdeckkastendeckels die Ver- und Entriegelungseinrichtung blockiert wird, nachdem der Verdeckkastendeckel entriegelt worden ist. Solange der Verdeckkastendeckel verriegelt ist, wirkt die Hubeinrichtung ausschließlich auf die Ver- und Entriegelungseinrichtung ein. Denn der verriegelte Verdeckkastendeckel ist blockiert. Durch das Anfahren des Anschlags wird die Bewegung der Ver- und Entriegelungseinrichtung nach dem Entriegeln automatisch gestoppt. Danach wird die Kraftübertragung der Hubeinrichtung ausschließlich auf die Öffnungs- und Schließeinrichtung übertragen.

Gemäß einem bevorzugten Ausführungsbeispiel der vorliegenden Erfindung umfasst die Ver- und Entriegelungseinrichtung ein Blockiermittel und einen Riegel. Das Blockiermittel ist derart angeordnet, dass beim Schließen des Verdeckkastendeckels der Riegel im entriegelten Zustand blockiert wird, bis der Verdeckkastendeckel geschlossen ist. Durch die Hubeinrichtung soll zunächst der Verdeckkastendeckel verschlossen und danach verriegelt werden. Beide Vorgänge sollen automatisch aufeinander folgen. Das Blockiermittel bewirkt, dass der Riegel so lange in einem entriegelten Zustand verweilt, bis der Verdeckkastendeckel geschlossen ist. Dazu weist das Blockiermittel vorzugsweise eine Feder auf, wobei die Feder den Riegel beim Verschließen des Verdeckkastendeckels derart vorspannt, dass der Riegel im entriegelten Zustand blockiert wird, bis der Verdeckkastendeckel geschlossen ist.

Gemäß einer bevorzugten Ausführungsform der vorliegenden Erfindung umfasst das Blockiermittel einen zweiten Anschlag. Der zweite Anschlag ist vorzugsweise derart angeordnet, dass der Anschlag bei geschlossenem Verdeckkastendeckel gegen die Federkraft wirkt, so dass der Riegel mittels der Hubeinrichtung in einen verriegelten Zustand versetzt werden kann. Der Anschlag bewirkt letztlich, dass das Blockiermittel den Riegel nicht mehr im entriegelten Zustand blockiert, sobald der Verdeckkasten geschlossen ist. Dadurch kann der Verdeckkastendeckel mittels der Hubeinrichtung verriegelt werden, sobald der Verdeckkastendeckel den Aufnahmeraum verschließt.

Die Öffnungs- und Schließeinrichtung umfasst vorzugsweise eine Kniehebelanordnung, wobei die Kniehebelanordnung durch die Hubeinrichtung anlenkbar ist, wodurch der Verdeckkastendeckel geöffnet wird. Die Kniehebelanordnung hat eine Hebelwirkung. Die Hubeinrichtung muss aufgrund der Hebelwirkung einen geringeren Weg ausfahren, um den Verdeckkastendeckel zu öffnen. Dieser kürzere Hubweg kann schneller zurückgelegt werden. Dafür wird zwar eine größere Kraft erfordert, aber der Öffnungsvorgang wird beschleunigt und die Hubeinrichtung kann kleiner ausfallen.

Die erfindungsgemäße Vorrichtung ist vorzugsweise derart angeordnet, dass sie im geschlossenen Zustand auf dem Verdeck aufliegt und beim Öffnen des Verdeckkastendeckels die Hubeinrichtung und die Öffnungs- und Schließeinrichtung zwischen den Verdeckkastendeckel und die Karosserie ausschwenken. Dadurch, dass die erfindungsgemäße Vorrichtung im geschlossenen Zustand auf dem Verdeck aufliegt, ist sie dem Verdeck beim Einfahren in den Verdeckkasten nicht im Weg. Die Vorrichtung ist dem Verdeck aus dem Grunde nicht im Weg, da die Vorrichtung unter dem Verdeckkastendeckel angebracht ist. Wenn sich der Verdeckkastendeckel öffnet, kann sich die Öffnungs- und Schließeinrichtung aus dem Weg bewegen.

Nachfolgend wird ein bevorzugtes Ausführungsbeispiel der vorliegenden Erfindung anhand der beigefügten Figuren beschrieben. Es zeigen:
Fig. 1 eine Seitenansicht einer Öffnungs- und Schließvorrichtung gemäß dem bevorzugten Ausführungsbeispiel der vorliegenden Erfindung im geschlossenen Zustand;
Fig. 2 eine Seitenansicht der Öffnungs- und Schließvorrichtung gemäß dem bevorzugten Ausführungsbeispiel der vorliegenden Erfindung im geöffneten Zustand;
Fig. 3 eine Seitenansicht der Ver- und Entriegelungseinrichtung gemäß dem bevorzugten Ausführungsbeispiel der vorliegenden Erfindung im verriegelten Zustand mit Verschlussplatte;
Fig. 4 eine Seitenansicht der Ver- und Entriegelungseinrichtung gemäß dem bevorzugten Ausführungsbeispiel der vorliegenden Erfindung im verriegelten Zustand ohne Verschlussplatte;
Fig. 5 eine Seitenansicht der Ver- und Entriegelungseinrichtung gemäß dem bevorzugten Ausführungsbeispiel der vorliegenden Erfindung im entriegelten Zustand.

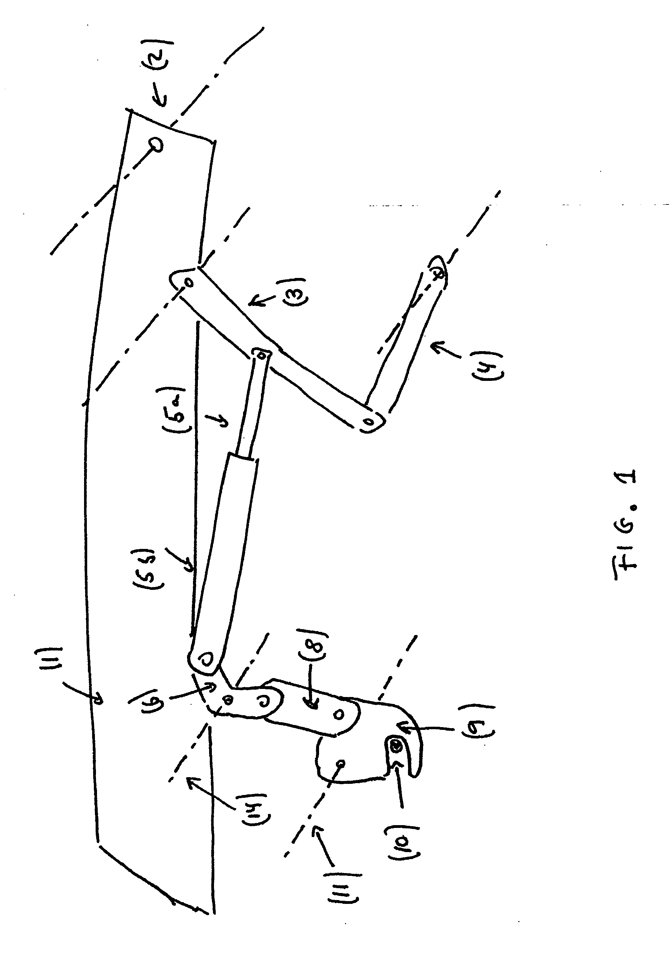

Die Figur 1 zeigt eine Öffnungs- und Schließvorrichtung, der ein Verdeckkastendeckel 1 zugeordnet ist. Der Verdeckkastendeckel 1 ist schwenkbar um eine Achse 2 mit der Karosserie verbunden. Des weiteren ist das andere Ende des Verdeckkastendeckels 1 in Fahrzeuglängsrichtung auf der vorderen Seite durch einen Verschlusshaken 9, der in einen Verschlussbügel 10 eingreift, verriegelt. Der Verschlussbügel 10 ist wiederum fest mit dem Rohbau des Fahrzeuges verbunden.

Zur Öffnung des Verdeckkastendeckels 1 wird eine Hubeinrichtung 5a, 5b aktiviert, die eine Zylinderstange 5a aus einem Zylinder 5b drückt. Die Hubeinrichtung 5a, 5b ist auf der einen Seite mit einer Öffnungs- und Schließeinrichtung 2-4 und auf der anderen Seite mit einer Ver- und Entriegelungseinrichtung 6-15 verbunden. Beim anfänglichen Ausfahren der Hubeinrichtung 5a, 5b ist die Öffnungs- und Schließeinrichtung 2-4 starr, da der Verdeckkastendeckel 1 noch verriegelt ist und sich nicht um die Achse 2 schwenken lässt. Folglich kann sich nur das andere Ende der Hubeinrichtung 5a, 5b bewegen, welches die Ver- und Entriegelungseinrichtung 6-15 antreibt.

Die Hubeinrichtung 5a, 5b ist mit dem Steuerlenker 6 der Ver- und Entriegelungseinrichtung 6-15 mit verbunden. Dieser Steuerlenker 6 ist über eine Steuerlenkerachse 14 mit dem Verdeckkastendeckel 1 schwenkbar verbunden. Bei der Draufsicht auf Figur 1 ist zu sehen, dass durch das Antreiben der Hubeinrichtung 5a, 5b der Steuerlenker 6 sich gegen den Uhrzeigersinn dreht. Am anderen Ende des Steuerlenkers 6 befindet sich ein Koppellenker 8, der den Steuerlenker 6 mit dem Verschluss 9 verbindet. Der Verschluss 9 ist wiederum über eine Verschlussachse 11 schwenkbar mit dem Verdeckkastendeckel 1 verbunden. Bei der Draufsicht auf Figur 1 ist zu sehen, dass durch die Bewegung des Steuerlenkers 6 im Gegenuhrzeigersinn der Koppellenker 8 hochgezogen wird, was wiederum zur Folge hat, dass der Verschluss 9 sich ebenfalls gegen den Uhrzeigersinn um seine Achse 11 dreht. Durch diese Drehung des Verschlusses 9 wird der Verschlussbügel 10 freigegeben und damit der Verdeckkastendeckel 1 entriegelt.

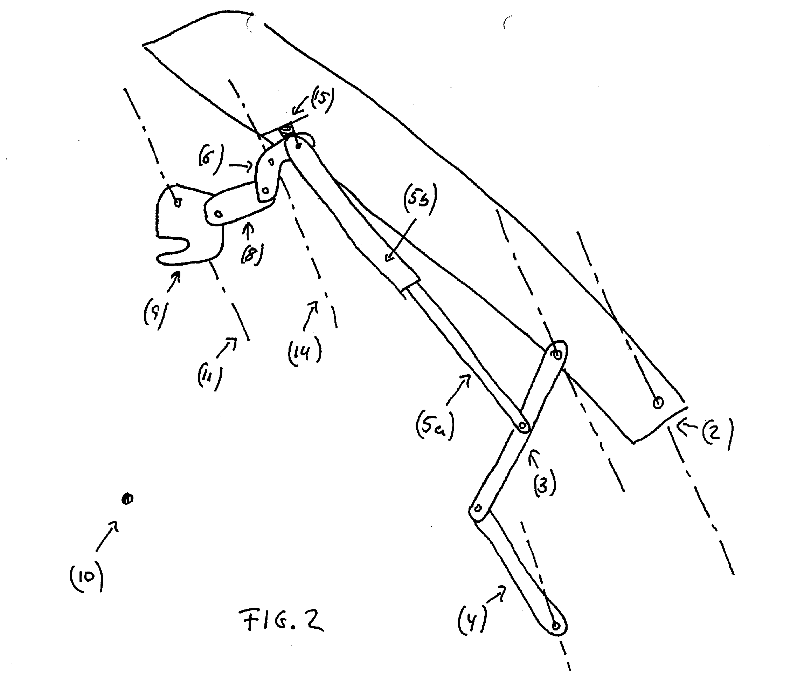

In Figur 2 ist zu sehen, wie der Steuerlenker 6 auf einen Anschlag 15 trifft, welcher die Bewegungsfreiheit des Steuerlenkers 6 und somit auch der Hubeinrichtung 5a, 5b in dieser Richtung beschränkt. Da die Hubeinrichtung 5a, 5b jedoch weiterhin ausfährt, treibt sie nun die Öffnungs- und Schließeinrichtung 2-4 an. Da die Öffnungs- und Schließeinrichtung 2-4 durch die Entriegelung nicht mehr starr ist, werden durch das Antreiben der Hubeinrichtung 5a, 5b die Kniehebellenker 3, 4 gestreckt. Dies hat zur Folge, dass sich der Verdeckkastendeckel 1 um die Achse 2 dreht und somit den Verdeckkasten freigibt.

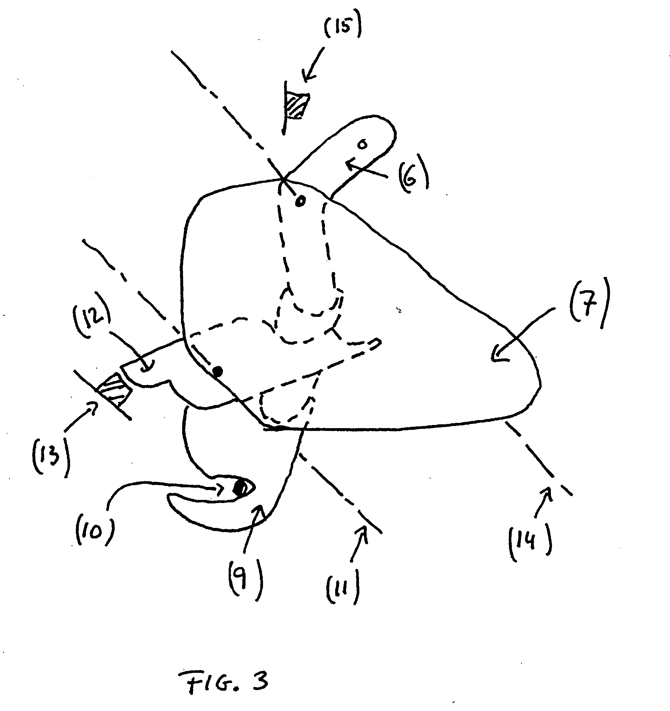

In Figur 3 ist zu sehen, wie die Ver- und Entriegelungseinrichtung 6-15 durch eine Verschlussplatte 7 an dem Verdeckkastendeckel 1 angebracht ist. Zu sehen ist auch, dass die Ver- und Entriegelungseinrichtung 6-15 nur durch die beiden Achsen 11, 14 mit dem Verdeckkastendeckel 1 und der Verschlussplatte 7 verbunden ist.

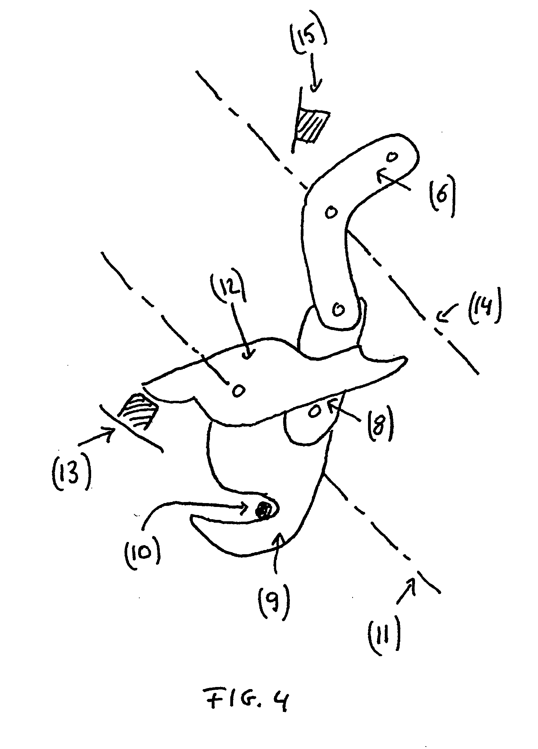

In Figur 4 wird die Vorrichtung gezeigt, die dafür verantwortlich ist, dass der Verschluss 9 erst dann wieder in die Schließposition geht, wenn der Verdeckkastendeckel 1 komplett geschlossen ist. Dies geschieht mit Hilfe eines Blockiermittels. Das Blockiermittel wird in dem bevorzugten Ausführungsbeispiel durch eine federgesteuerte Riegelwippe 12 und einen Anschlag 13 realisiert. Die Riegelwippe ist drehbar an der Achse 11 angebracht. Die Federsteuerung bewirkt ein Drehmoment der Riegelwippe 12. Die Richtung des Drehmoments ist entlang der Achse 11 des Verschlusshakens aus der Zeichenebene heraus orientiert. Diesem Drehzwang steht das untere Ende des Steuerlenkers 6 entgegen. Wenn der Steuerlenker 6 während des Entriegelungsvorgangs gedreht wird, ermöglicht dies der Riegelwippe 12 ebenfalls ein Stück weiter zu drehen, und zwar so weit, dass sich die Einbuchtung am längeren Ende der Riegelwippe 12 formschlüssig mit dem Steuerlenker 6 verbindet.

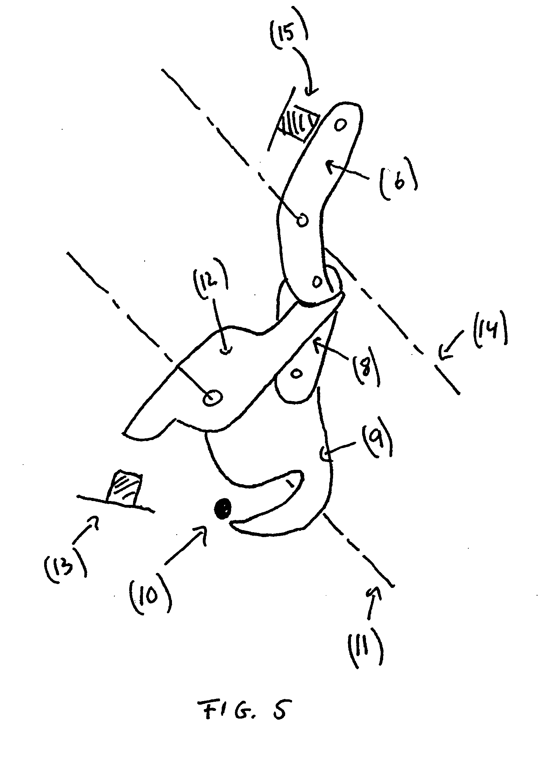

Siehe hierzu Figur 5. Dies hat zur Folge, dass der Steuerlenker 6, und somit der Koppellenker 8 und der Verschluss 9, in der geöffneten Position blockiert werden.

Die Blockierung der Ver- und Entriegelungseinrichtung 6-15 im geöffneten Zustand wird dadurch gelöst, dass die freie Seite der federgesteuerten Riegelwippe 12 an einen Anschlag 13 anschlägt. Dies zwingt die Riegelwippe 12 dazu, sich mit dem Uhrzeigersinn zu drehen, was wiederum die Blockierung des Steuerlenkers 6 auflöst. Die Platzierung des Anschlags 13 ist so angelegt, dass der Steuerlenker 6 dann entriegelt wird, wenn der Verdeckkasten 1 komplett geschlossen ist.

Wenn der Verdeckkastendeckel 1 sich im geschlossenen Zustand befindet, bewirkt die Zugkraft der Hubeinrichtung 5a, 5b, dass der Verschluss 9 sich über den Verschlussbügel 10 stülpt und somit die Ver- und Entriegelungsvorrichtung 6-15 verriegelt.

## Patentansprüche

1. Vorrichtung zum Öffnen und Schließen eines Verdeckkastendeckels (1) eines Fahrzeuges, wobei der Verdeckkastendeckel (1) im geschlossenen Zustand einen Aufnahmeraum zur Unterbringung eines Verdecks verschließt, wobei die Vorrichtung umfasst:
eine Öffnungs- und Schließeinrichtung (2-4) zum Öffnen und Schließen des Verdeckkastendeckels,
eine Ver- und Entriegelungseinrichtung (6-15) zum Verriegeln und Entriegeln des Verdeckkastendeckels und
eine Hubeinrichtung (5a, 5b), die zwischen der Ver- und Entriegelungseinrichtung (6-15) und der Öffnungs- und Schließeinrichtung (2-4) derart angeordnet ist, dass ein Verriegeln und Entriegeln sowie ein Öffnen und Schließen des Verdeckkastendeckels (1) durch die Hubeinrichtung (5a, 5b) steuerbar ist, **dadurch gekennzeichnet, dass**
der Verdeckkastendeckel (1) schwenkbar um eine Achse (2) mit dem Fahrzeug verbunden ist und einen an seiner in Fahrzeuglängsrichtung vorderen Seite angeordneten Verschlusshaken aufweist, der in einen fest mit dem Rohbau des Fahrzeuges verbundenen Verschlussbügel eingreifend ausgebildet ist und die Öffnungs- und Schließeinrichtung (2-4) eine Kniehebelanordnung (3, 4) umfasst, die durch die Hubeinrichtung (5a, 5b) anlenkbar ist, wodurch der Verdeckkastendeckel (1) geöffnet wird.

2. Vorrichtung nach Anspruch 1, wobei die Ver- und Entriegelungseinrichtung (6-15) einen ersten Anschlag (15) aufweist, wobei der erste Anschlag (15) derart angeordnet ist, dass beim Öffnen des Verdeckkastendeckels (1) die Ver- und Entriegelungseinrichtung (6-15) blockiert wird, nachdem der Verdeckkastendeckel (1) entriegelt worden ist.

3. Vorrichtung nach Anspruch 1 oder 2, wobei die Ver- und Entriegelungseinrichtung (6-15) ein Blockiermittel (12) und einen Riegel (9) umfasst, wobei das Blockiermittel (12) derart angeordnet ist, dass beim Schließen des Verdeckkastendeckels (1) der Riegel (9) im entriegelten Zustand blockiert wird, bis der Verdeckkastendeckel (1) geschlossen ist.

4. Vorrichtung gemäß Anspruch 3, wobei das Blockiermittel (12) eine Feder aufweist, wobei die Feder den Riegel (9) beim Verschließen des Verdeckkastendeckels (1) derart vorspannt, dass der Riegel (9) im entriegelten Zustand blockiert wird, bis der Verdeckkastendeckel (1) geschlossen ist.

5. Vorrichtung gemäß Anspruch 4, wobei das Blockiermittel (12) einen zweiten Anschlag (13) aufweist, wobei der Anschlag (13) derart angeordnet ist, dass der Anschlag (13) bei geschlossenem Verdeckkastendeckel (1) gegen die Federkraft wirkt, so dass der Riegel (9) mittels der Hubeinrichtung (5a, 5b) in einen verriegelten Zustand versetzt werden kann.

6. Vorrichtung nach Anspruch 3, **dadurch gekennzeichnet, dass** die Vorrichtung derart angeordnet ist, dass sie im geschlossenen Zustand auf dem Verdeck aufliegt und beim Öffnen des Verdeckkastendeckels (1) die Hubeinrichtung (5a, 5b) und die Öffnungs- und Schließeinrichtung (2-4) zwischen den Verdeckkastendeckel und die Karosserie ausschwenken.
